# EUROPÄISCHE PATENTSCHRIFT

(11) **EP 2 721 603 B1**
(45) Veröffentlichungstag und Bekanntmachung des Hinweises auf die Patenterteilung: **06.03.2019**
(21) Anmeldenummer: 12728544.3
(22) Anmeldetag: 19.06.2012
(51) Int. Cl.: G10K 11/00, G01S 15/93, G01S 7/521, B60R 19/48

(54) **ULTRASCHALLSENSORVORRICHTUNG FÜR EIN FAHRZEUG SOWIE ANORDNUNG MIT EINER DERARTIGEN ULTRASCHALLSENSORVORRICHTUNG**
ULTRASONIC SENSOR DEVICE FOR A VEHICLE AND ARRANGEMENT COMPRISING SUCH AN ULTRASONIC SENSOR DEVICE
APPAREIL DE DÉTECTION À ULTRASONS POUR UN VÉHICULE ET DISPOSITIF COMPORTANT UN TEL APPAREIL DE DÉTECTION À ULTRASONS

(30) Priorität: 20.06.2011 DE 102011105046
(43) Veröffentlichungstag der Anmeldung: 23.04.2014
(73) Patentinhaber: Valeo Schalter und Sensoren GmbH, 74321 Bietigheim-Bissingen (DE); Volkswagen Aktiengesellschaft, 38440 Wolfsburg (DE)
(72) Erfinder: WEHLING,Hans-Wilhelm, 74074 Heilbronn (DE); WEBER, Natalie, 74321 Bietigheim-Bissingen (DE); WEYLAND, Jörg, 74336 Brackenheim (DE); MAX, Stephan, 38518 Gifhorn (DE)
(74) Vertreter: Hofstetter, Schurack & Partner
(86) Internationale Anmeldenummer: PCT/EP2012/061672
(87) Internationale Veröffentlichungsnummer: WO 2012/175480

(56) Entgegenhaltungen:
- DE-A1- 10 310 454
- DE-A1-102006 008 718
- DE-A1-102006 022 968
- DE-A1-102008 016 558
- DE-A1-102008 049 081
- DE-A1-102008 055 126
- JP-A- 62 240 890

## Beschreibung

Die Erfindung betrifft eine Ultraschallsensorvorrichtung für ein Fahrzeug mit zumindest einem Ultraschallsensor und einer den Ultraschallsensor nach hinten abdeckenden Kappe. Des Weiteren betrifft die Erfindung eine Anordnung mit einer derartigen Ultraschallsensorvorrichtung und einem Verkleidungsteil eines Fahrzeugs.

Aus dem Stand der Technik sind Ultraschallsensoren so verbaut, dass sie die in sichtbarer Weise an einem Stoßfänger befestigt sind. Dies bedeutet, dass die Stoßfänger ein Loch bzw. eine Durchbrechung aufweisen, in denen der Ultraschallsensor angeordnet ist und frei und unabgedeckt nach vorne abstrahlen kann.

Darüber hinaus sind auch Ultraschallsensoren bekannt, die in verdeckter Bauweise an einem Stoßfänger an einer Innenseite angeordnet sind. Bei einer derartigen verdeckten Bauweise der Ultraschallsensoren sind diese vollständig durch den Stoßfänger frontseitig abgedeckt. Dies bedeutet, dass der Ultraschallsensor seine Signale durch den Stoßfänger hindurch senden muss. Bei einer derartig verdeckten Bauweise tritt ein Problem dahingehend auf, dass der mechanische und fest mit dem Stoßfänger verbundene Ultraschallsensor erheblich lauter nach hinten abstrahlt und dies mit etwa 95 dB erfolgt. Dies bedeutet, dass hinter dem Ultraschallsensor, wenn er nicht akustisch erheblich isoliert wird, in großem Abstand keine Anbauteile um den Wandler angebracht werden können, um nicht Scheinechos zu erzeugen. Eine weitere Problematik die dabei entsteht ist, dass der bereits ohnehin sehr kleine Bauraum hinter dem Stoßfänger dadurch nochmals begrenzt wird und darüber hinaus auch die richtige Einbauposition für den Ultraschallsensor zu finden ist.

Aus der DE 10 2006 022 968 A1 ist eine Abdeckung für einen Parkhilfesensor im eingebauten Zustand bekannt. Die becherartige Sensorabdeckung weist an der Mantelseite einen Durchbruch auf, der sich vom Boden bis zur Decke erstreckt. Dies soll ein Durchbruch für einen Steckerabgang des Sensors sein.

Aus der DE 2006 008 718 A1 ist ein Ultraschallsensormodul bekannt, welches einen Ultraschallsensor, eine Abdeckkappe und eine Halterung mit einer Platte aufweist.

Es ist Aufgabe der vorliegenden Erfindung, eine Ultraschallsensorvorrichtung sowie eine Anordnung mit einer derartigen Ultraschallsensorvorrichtung zu schaffen, bei welcher die akustische Dämpfung nach hinten eines verdeckt hinter einem Stoßfänger verbauten Ultraschallsensors zu verbessern und dabei auch die mechanisch sichere Positionierung zu gewährleisten.

Diese Aufgabe wird durch eine Ultraschallsensorvorrichtung gemäß Patentanspruch 1 als auch durch eine Anordnung gemäß Patentanspruch 8 gelöst. Eine erfindungsgemäße Ultraschallsensorvorrichtung für ein Fahrzeug umfasst zumindest einen Ultraschallsensor. Der Ultraschallsensor ist nach hinten durch eine Kappe abgedeckt. Die Ultraschallsensorvorrichtung umfasst eine Halterung, an der der Ultraschallsensor angeordnet ist. Die Kappe umgibt die Halterung und den Ultraschallsensor sowohl zur Seite als auch nach hinten vollständig. Eine derartig ausgebildete Ultraschallsensorvorrichtung ermöglicht einerseits ein zuverlässiges und mechanisch stabiles Befestigen des Ultraschallsensors insbesondere bei verdeckter Bauweise an einem Verkleidungsteil des Fahrzeugs. Darüber hinaus ist durch das vollständige Umgeben nach hinten sowohl des Ultraschallsensors als auch der Halterung durch die Abdeckkappe eine besonders dämpfende Wirkung erzielt, sodass die akustische Abstrahlung des Ultraschallsensors nach hinten und somit entgegen der Hauptabstrahlrichtung nach vorne deutlich gedämpft ist. Durch eine derartige Ausgestaltung kann eine Dämpfung des Schalldrucks um etwa 20 dB oder sogar mehr erreicht werden.

Vorzugsweise ist vorgesehen, dass die Kappe formschlüssig an der Außenseite der Halterung anliegt. Durch diese Ausgestaltung wird eine besonders kompakte und bauraumminimierte Realisierung ermöglicht.

Vorzugsweise ist vorgesehen, dass die Innenseite der Kappe, welche der Halterung zugewandt ist, zumindest bereichsweise mit erhabenen Elementen, insbesondere Noppen, strukturiert ist. Dadurch wird die direkte Berührungsfläche zwischen der Kappe und der Halterung reduziert.

Insbesondere ist vorgesehen, dass die Halterung den Ultraschallsensor im Hinblick auf seine Bauhöhe vollständig aufnimmt. Auch dadurch wird die Kompaktheit der Vorrichtung begünstigt. Darüber hinaus ist der Ultraschallsensor in der Halterung mechanisch geschützt angeordnet als auch dahingehend positioniert, dass bereits durch die Halterung selbst eine gewisse Dämpfung des Schalls erzielt werden kann. Somit ist quasi durch die Halterung selbst und auch die Kappe, die die wesentliche Schalldruckreduktion bewirkt, ein duales Mittel zu dieser akustischen Dämpfung bereitgestellt.

Vorzugsweise ist vorgesehen, dass die Halterung nach hinten offen ausgebildet ist und die Öffnung durch die Kappe abgedeckt ist. Durch diese Ausgestaltung der nach hinten offenen Halterung kann die Einführung einerseits und die Entnahme andererseits des Ultraschallsensors in bzw. aus der Halterung besonders einfach und reversibel durchgeführt werden. Vorzugsweise ist der Ultraschallsensor zerstörungsfrei und reversibel lösbar in der Halterung angeordnet. Gerade bei der verdeckten Bauweise der Ultraschallsensorvorrichtung kann somit in einfacher Art und Weise der Ultraschallsensor zu Montagezwecken oder Wartungsarbeiten einfach entnommen nach hinten werden und wieder eingesetzt werden, ohne die gesamte Vorrichtung vom Verkleidungsteil entfernen zu müssen.

Indem das Einsetzen des Ultraschallsensors in die Halterung nur in ganz spezifischer Art und Weise ermöglicht ist, kann dadurch auch stets die richtige Einbauposition des Ultraschallsensors am Verkleidungsteil erzielt werden. Die Halterung ist nämlich stets an der gleichen Position ohnehin korrekt positioniert.

Die Halterung weist einen Aufnahmeschacht für den Ultraschallsensor auf. Dieser ist insbesondere rohrförmig ausgebildet. Durch diese Ausgestaltung kann quasi ein passgenaues Aufnehmen des Ultraschallsensors in dem Aufnahmeschacht erzielt werden, sodass radial zur Längsachse des Aufnahmeschachts und somit auch zur Längsachse des Ultraschallsensors kein Verschieben des Ultraschallsensors ermöglicht ist. Darüber hinaus ist der Ultraschallsensor mit seiner Bauhöhe entlang seiner Längsrichtung vollständig im Aufnahmeschacht versenkt angeordnet. Die bereits oben genannten Vorteile der minimalen Bauhöhe, des Schutzes und der positionssicheren Anbringung sind dadurch nochmals begünstigt.

Die Halterung weist einen an den Aufnahmeschacht nach vorne hin anschließenden Untersatz bzw. ein Frontteil auf, welcher bzw. welches einen größeren Durchmesser aufweist als der Aufnahmeschacht. Durch diese Ausgestaltung kann einerseits die mechanisch stabile Befestigung an dem Verkleidungsteil verbessert werden, da eine großflächige Auflage bzw. Anlage ermöglicht ist. Darüber hinaus ist durch diese spezifische Ausgestaltung der Halterung die Aufnahme von weiteren Komponenten in dem Untersatz gewährleistet. Auch diese können dann Bauraum sparend und geschützt darin angeordnet werden.

So ist vorgesehen, dass der Untersatz zur Aufnahme eines Dämpfungsrings zur Schwingungsdämpfung angeordnet ist. Dieser Dämpfungsring, der auch als Versteifungsring bezeichnet werden kann und welcher beispielsweise aus Keramik ausgebildet sein kann, dient auch zur Begrenzung der seitlichen Schallabstrahlung des Ultraschallsensors.

Darüber hinaus kann vorgesehen sein, dass in dem Untersatz ein Koppelelement bzw. Senderichtelement angeordnet ist, welches mit dem Frontteil einer Membran des Ultraschallsensors verbunden ist. Durch dieses Koppelelement kann die Senderichtcharakteristik des Ultraschallsensors ganz gezielt beeinflusst werden. Vorzugsweise ist dabei vorgesehen, dass die frontseitige und die rückseitige Koppelfläche des Koppelelements kleiner ist als die Fläche des Frontteils der Membran. Die Koppelflächen des Koppelelements können beispielsweise oval oder rechteckig ausgestaltet sein. Gerade bei der verdeckten Bauweise der Ultraschallsensorvorrichtung hinter einem Verkleidungsteil kann somit eine ganz gezielte Senderichtcharakteristik eingestellt werden. Das Koppelelement ist dabei insbesondere direkt mit der Membran des Ultraschallsensors und direkt mit der Innenseite des Verkleidungsteils verbunden, sodass eine ganz spezifische Schallübertragung bis zum Übertragungsbereich des Stoßfängers bzw. des Verkleidungsteils erzielt werden kann.

Die Halterung weist an der Mantelseite des Untersatzes zumindest zwei Rastelemente auf, welche in Aussparungen der Vertikalwand der Kappe zum Befestigen der Kappe an der Halterung eingreifen. Dadurch kann nicht nur eine Arretierung der Kappe an der Halterung in axialer Richtung erzielt werden, sondern auch eine Verdrehsicherheit gewährleistet werden.

Da sich die Kappe mit dem Aufnahmeschacht und dem Untersatz in ganz spezifischer Weise quasi als umgedrehter Pilz ausbildet, ist durch die vollständige Umgebung dieser Halterung durch die Kappe auch eine spezifische Formgebung der Kappe, insbesondere wenn diese formschlüssig an der Halterung anliegt, gegeben.

Vorzugsweise ist die Kappe aus einem thermoplastischen Elastomer ausgebildet.

Vorzugsweise ist vorgesehen, dass die Kappe nur eine Bohrung zur passgenauen Durchführung eines Steckeranschlusses des Ultraschallsensors aufweist, die insbesondere einen Kragen aufweist. Auch hier ist somit vorgesehen, dass der Rand dieser Durchführung an dem Steckeranschluss anliegt.

Darüber hinaus umfasst die Erfindung auch eine Anordnung mit einer Ultraschallvorrichtung gemäß der Erfindung oder einer vorteilhaften Ausgestaltung davon, und einem Verkleidungsteil, insbesondere einem Stoßfänger, an dessen Innenseite die Ultraschallsensorvorrichtung durch das Verkleidungsteil verdeckt verbaut und befestigt ist.

Insbesondere ist hier mit einer verdeckt verbauten Befestigung eine derartige vorgesehen, bei der die Ultraschallsensorvorrichtung frontseitig durch das Verkleidungsteil vollständig abgedeckt ist. Der Ultraschallsensor sendet seine Signale daher durch den Stoßfänger hindurch. Die Ultraschallwellen werden dabei durch einen Übertragungsbereich des Außenverkleidungsteils, insbesondere des Stoßfängers, hindurch gestrahlt. Durch diese Ausgestaltung ist auch eine besonders spritzwassergeschützte Positionierung des Ultraschallsensors gewährleistet.

Ein Ausführungsbeispiel der Erfindung wird nachfolgend anhand der schematischen Zeichnungen näher erläutert. Es zeigen:
- Fig. 1: eine perspektivische Darstellung eines Ultraschallsensors mit einer Halterung einer Ultraschallsensorvorrichtung;
- Fig. 2: eine Draufsicht auf die Ausgestaltung gemäß Fig. 1; und
- Fig. 3: eine Schnittdarstellung durch ein Ausführungsbeispiel einer erfindungsgemäßen Anordnung.

In den Figuren werden gleiche oder funktionsgleiche Elemente mit den gleichen Bezugszeichen versehen.

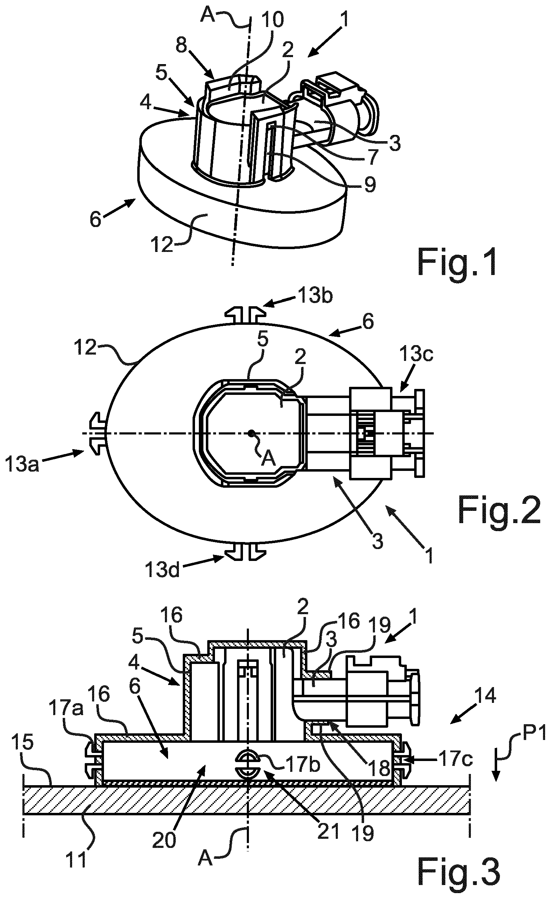

In Fig. 1 ist in einer perspektivischen Darstellung eine Ultraschallsensorvorrichtung 1 mit Teilkomponenten gezeigt. Die Ultraschallsensorvorrichtung 1 umfasst einen Ultraschallsensor 2, bei dem seitlich zu seiner Längsachse A ein Steckeranschluss 3 angeordnet ist. Dieser zeigt somit radial zur Seite.

Die Ultraschallsensorvorrichtung 1 umfasst darüber hinaus eine Halterung 4, welche einstückig aus Kunststoff ausgebildet ist. Die Halterung 4 umfasst einen Aufnahmeschacht 5, an den frontseitig ein Untersatz 6 angeordnet ist. Der Aufnahmeschacht 5 ist zum passgenauen Einführen des Ultraschallsensors 2 ausgebildet. Darüber hinaus ist vorgesehen, dass der Ultraschallsensor 2 mit seiner Bauhöhe entlang der Achse A vollständig in dem Aufnahmeschacht 5 angeordnet und entsprechend versenkt ist. Darüber hinaus ist der Ultraschallsensor 2 auch passgenau darin angeordnet, sodass er sich radial nicht verschieben kann.

Der Ultraschallsensor 2 ist in dem Aufnahmeschacht 5 zerstörungsfrei lösbar und reversibel einsetzbar und entnehmbar. Im Ausführungsbeispiel ist dabei vorgesehen, dass der Ultraschallsensor 2 Rastelemente 7 und 8 aufweist, die in Rastaufnahmen 9 und 10 verrasten.

Darüber hinaus weist der Aufnahmeschacht 5 einen kleineren Durchmesser bzw. kleinere Außenausmaße auf, als der im Ausführungsbeispiel oval ausgebildete Untersatz.

Mittels diesem Halter bzw. dieser Halterung 4 ist die Ultraschallsensorvorrichtung 1 in verdeckt verbauter Anordnung an einer Innenseite eines als Stoßfänger 11 (Fig. 3) ausgebildeten Außenverkleidungsteils eines Fahrzeugs angeordnet.

In Fig. 2 ist eine Draufsicht auf die Komponenten der Ultraschallsensorvorrichtung 1 gemäß Fig. 1 gezeigt. Es ist dabei zu erkennen, dass an einer Mantelseite 12 des Untersatzes 6 in Umlaufrichtung vier Doppelrastelemente 13a, 13b, 13c und 13d ausgebildet sind.

In Fig. 3 ist in einer schematischen Schnittdarstellung ein Ausführungsbeispiel einer Anordnung 14 mit dem Stoßfänger 11 und der Ultraschallsensorvorrichtung 1 gezeigt. Die Halterung 6 ist dabei vollflächig an einer Innenseite 15 des Stoßfängers 11 angeordnet, insbesondere angeklebt. Der Stoßfänger 11 bedeckt somit frontseitig die Ultraschallsensorvorrichtung 1 vollständig.

Es ist zu erkennen, dass die Halterung 4 und der Ultraschallsensor 2 zur Seite und nach hinten vollständig durch eine Kappe 16 abgedeckt sind. Die Kappe 16 liegt dabei formschlüssig an den Außenseiten der Halterung 4 an. Darüber hinaus weist die Halterung 16 Öffnungen 17a, 17b und 17c sowie eine in der Schnittdarstellung nicht zu erkennende weitere Öffnung auf, durch welche sich die Rastelemente 13a bis 13d erstrecken und somit die verdrehsichere und in axialer Richtung gesicherte Befestigung der Kappe 16 ermöglichen. Die Kappe 16 kann auch zerstörungsfrei reversibel dann wieder abgenommen werden. Die Kappe 16 ist aus einem thermoplastischen Elastomer und mit einer Wanddicke ausgebildet, welche eine Schalldruckreduktion der Schallabstrahlung des Ultraschallsensors 2 nach hinten und somit entgegen der Hauptabstrahlrichtung gemäß der Pfeildarstellung P1 um zumindest 15 dB, insbesondere etwa 20 dB erwirkt.

Die Kappe 16 weist nur eine Öffnung 18 auf, durch welche sich der Steckeranschluss 3 nach außen erstreckt, wobei gemäß der Darstellung in Fig. 3 die Kappe 16 auch im Bereich der Öffnung direkt an die Außenwand des Steckeranschlusses 3 anliegt und dazu auch noch einen in radialer Richtung gerichteten Kragen 19 aufweist. Wie aus der Darstellung in Fig. 3 des Weiteren zu erkennen ist, erstreckt sich die Kappe 16 ebenfalls bis zur Innenseite 15 des Stoßfängers 11.

Im Untersatz 6 der Halterung 4 ist erfindungsgemäß ein lediglich durch ein Bezugszeichen angedeuteter Dämpfungsring 20 angeordnet, welcher als Versteifungsring ausgebildet ist und beispielsweise aus Keramik ausgebildet sein kann. Der Dämpfungsring 20 dient zur Begrenzung der Abstrahlung und insbesondere auch zur Schwingungsdämpfung und somit der Reduzierung der Schwingungsübertragung auf den Stoßfänger 11 außerhalb des frontseitigen Übertragungsbereichs.

Darüber hinaus ist im Untersatz 6 ein ebenfalls nicht näher gezeigtes aber mit einem Bezugszeichen versehenes Koppelelement 21 angeordnet, welches auch ein Senderichtelement ist. Dieses kann beispielsweise einstückig an die Halterung 4 angespritzt sein und ein Kunststoffteil sein. Es ist insbesondere mit einer nicht gezeigten Membran, insbesondere einem Frontteil der Membran direkt gekoppelt und andererseits direkt an die Innenseite 15 des Stoßfängers 11 angekoppelt. Mit diesem Koppelelement 21 ist eine Senderichtcharakteristik des Ultraschallsensors 2 gezielt einstellbar.

## Patentansprüche

1. Ultraschallsensorvorrichtung (1) für ein Fahrzeug, mit einem Ultraschallsensor (2), einer Halterung (4) und einer den Ultraschallsensor (2) nach hinten abdeckenden Kappe (16), wobei der Ultraschallsensor (2) in der Halterung (4) angeordnet ist und die Kappe (16) die Halterung (4) zur Seite und nach hinten vollständig umgibt, wobei die Halterung (4) einen Aufnahmeschacht (5) für den Ultraschallsensor (2) und einen an den Aufnahmeschacht (5) nach vorne anschließenden Untersatz (6) aufweist, welcher einen größeren Durchmesser aufweist als der Aufnahmeschacht (5), **dadurch gekennzeichnet, dass** die Ultraschallsensorvorrichtung (1) weiterhin einen Dämpfungsring (20) aufweist, der in dem Untersatz (6) zur Schwingungsdämpfung angeordnet ist, und der Dämpfungsring (20) als Versteifungsring ausgebildet ist, wobei die Halterung (4) an der Mantelseite des Untersatzes (6) zumindest zwei Rastelemente (13a bis 13d) aufweist, welche in Aussparungen (17a, 17b, 17c) der Vertikalwand der Kappe (16) zum Befestigen der Kappe (16) an der Halterung (4) eingreifen.

2. Ultraschallsensorvorrichtung (1) nach Anspruch 1,
**dadurch gekennzeichnet, dass**
die Kappe (16) formschlüssig an der Außenseite der Halterung (4) anliegt.

3. Ultraschallsensorvorrichtung nach Anspruch 1 oder 2,
**dadurch gekennzeichnet, dass**
die Kappe (16) auf ihrer der Halterung (4) zugewandten Innenseite mit Noppen strukturiert ist.

4. Ultraschallsensorvorrichtung (1) nach Anspruch 1 oder 2,
**dadurch gekennzeichnet, dass**
die Halterung (4) den Ultraschallsensor (2) im Hinblick auf seine Bauhöhe vollständig aufnimmt.

5. Ultraschallsensorvorrichtung (1) nach einem der vorhergehenden Ansprüche,
**dadurch gekennzeichnet, dass**
die Halterung (4) nach hinten offen ist und die Öffnung durch die Kappe (16) abgedeckt ist.

6. Ultraschallsensorvorrichtung (1) nach einem der vorhergehenden Ansprüche,
**dadurch gekennzeichnet, dass**
in dem Untersatz (6) ein Koppelelement (21) zur Einstellung der Senderichtcharakteristik angeordnet ist, welches mit dem Frontteil einer Membran des Ultraschallsensors (2) verbunden ist.

7. Ultraschallsensorvorrichtung (1) nach einem der vorhergehenden Ansprüche,
**dadurch gekennzeichnet, dass**
die Kappe (16) nur eine seitliche Öffnung (18) zur passgenauen Durchführung eines Steckeranschlusses (3) des Ultraschallsensors (2) aufweist.

8. Anordnung (14) mit einer Ultraschallsensorvorrichtung (1) nach einem der vorhergehenden Ansprüche, und einem Verkleidungsteil, insbesondere einem Stoßfänger (11), an dessen Innenseite (15) die Ultraschallsensorvorrichtung (1) durch das Verkleidungsteil (11) verdeckt verbaut befestigt ist.

## Claims

1. Ultrasonic sensor device (1) for a vehicle, including an ultrasonic sensor (2), a mount (4) and a cap (16) rearward covering the ultrasonic sensor (2), wherein the ultrasonic sensor (2) is arranged in the mount (4) and the cap (16) laterally and rearward completely surrounds the mount (4), wherein the mount (4) comprises a receiving duct (5) for the ultrasonic sensor (2) and a pedestal (6) forward adjoining to the receiving duct (5), which has a larger diameter than the receiving duct (5), **characterized in that** the ultrasonic sensor device (1) further comprises a damping ring (20), which is arranged in the pedestal (6) for vibration damping, and the damping ring (20) is formed as a stiffening ring, wherein the mount (4) comprises at least two locking elements (13a to 13d) on the jacket side of the pedestal (6), which engage with recesses (17a, 17b, 17c) of the vertical wall of the cap (16) for fixing the cap (16) to the mount (4).

2. Ultrasonic sensor device (1) according to claim 1,
**characterized in that**
the cap (16) positively abuts on the outer side of the mount (4).

3. Ultrasonic sensor device according to claim 1 or 2,
**characterized in that**
the cap (16) is structured with knobs on its inner side facing the mount (4).

4. Ultrasonic sensor device (1) according to claim 1 or 2,
**characterized in that**
the mount (4) completely receives the ultrasonic sensor (2) with regard to its installation height.

5. Ultrasonic sensor device (1) according to any one of the preceding claims,
**characterized in that**
the mount (4) is rearward open and the opening is covered by the cap (16).

6. Ultrasonic sensor device (1) according to any one of the preceding claims,
**characterized in that**
a coupling element (21) for adjusting the transmitting directional characteristic is arranged in the pedestal (6), which is connected to the front part of a diaphragm of the ultrasonic sensor (2).

7. Ultrasonic sensor device (1) according to any one of the preceding claims,
**characterized in that**
the cap (16) comprises only one lateral opening (18) for accurately fitting passage of a plug terminal (3) of the ultrasonic sensor (2).

8. Assembly (14) with an ultrasonic sensor device (1) according to any one of the preceding claims and a trim part, in particular a bumper (11), to the inner side (15) of which the ultrasonic sensor device (1) is fixed installed covered by the trim part (11).

## Revendications

1. Appareil de détection à ultrasons (1) pour un véhicule, avec un capteur à ultrasons (2), un support (4) et un capot (16), recouvrant le capteur à ultrasons (2) vers l'arrière, le capteur à ultrasons (2) étant agencé dans le support (4) et le capot (16) entourant intégralement le support (4) sur le côté et vers l'arrière, le support (4) présentant un puits de réception (5) pour le capteur à ultrasons (2) et un socle (6) de raccordement au puits de réception (5) vers l'avant, lequel présente un diamètre supérieur à celui du puits de réception (5),
**caractérisé en ce que**
l'appareil de détection à ultrasons (1) présente en outre une bague d'amortissement (20), qui est agencée dans le socle (6) pour l'amortissement des vibrations et la bague d'amortissement (20) est constituée en tant qu'anneau de raidissement, le support (4) présentant, sur le côté enveloppe du socle (6), au moins deux éléments d'encliquetage (13a à 13d), lesquels se mettent en prise dans des évidements (17a, 17b, 17c) de la paroi verticale du capot (16), pour fixer le capot (16) au support (4).

2. Appareil de détection à ultrasons (1) selon la revendication 1,
**caractérisé en ce que**
le capot (16) adhère par complémentarité de forme à la face extérieure du support (4).

3. Appareil de détection à ultrasons selon la revendication 1 ou 2,
**caractérisé en ce que**
le capot (16) est structuré, sur sa face intérieure, tournée vers le support (4), avec des grosseurs.

4. Appareil de détection à ultrasons (1) selon la revendication 1 ou 2,
**caractérisé en ce que**
le support (4) loge intégralement le capteur à ultrasons (2) en ce qui concerne sa hauteur d'installation.

5. Appareil de détection à ultrasons (1) selon l'une des revendications précédentes,
**caractérisé en ce que**
le support (4) est ouvert vers l'arrière et que l'ouverture est recouverte par le capot (16).

6. Appareil de détection à ultrasons (1) selon l'une des revendications précédentes,
**caractérisé en ce**
**qu'**un élément de couplage (21) est agencé dans le socle (6), pour régler la caractéristique du sens de rayonnement, lequel est relié à la partie avant d'une membrane du capteur à ultrasons (2).

7. Appareil de détection à ultrasons (1) selon l'une des revendications précédentes,
**caractérisé en ce que**
le capot (16) ne présente qu'une ouverture latérale (18) pour une traversée précise d'un raccordement par connecteur (3) du capteur à ultrasons (2).

8. Agencement (14) avec un appareil de détection à ultrasons (1) selon l'une des revendications précédentes et une partie formant habillage, en particulier un dispositif d'amortissement de chocs (11), sur la face intérieure (15) duquel est fixé, monté dissimulé, l'appareil de détection à ultrasons (1) à travers la partie formant habillage (11).
